# EUROPEAN PATENT APPLICATION

(11) **EP 3 922 842 A1**
(43) Date of publication of application: **15.12.2021**
(21) Application number: 21178405.3
(22) Date of filing: 09.06.2021
(51) Int. Cl.: F03D 7/04, F03D 17/00

(54) **METHOD OF CONTROLLING A WIND TURBINE**

(30) Priority: 11.06.2020 DK PA202070369
(71) Applicant: VESTAS WIND SYSTEMS A/S, 8200 Aarhus N (DK)
(72) Inventor: Nyvad, Jesper, 8250 Egå (DK); Svendsen, Karl H., 8370 Hadsten (DK); Nielsen, Johnny, 9230 Svenstrup J (DK)
(74) Representative: Vestas Patents Department

(57) **Abstract**

A method of controlling a wind turbine (1), the method comprising: determining an initial thermal model (34) representing thermal characteristics of a plurality of components (10, 12, 14, 16) of a first wind turbine (1); receiving operational data relating to thermal characteristics of components (10, 12, 14, 16) of a plurality of wind turbines (1); processing the initial thermal model (34) and the operational data using an optimisation algorithm (36) to determine a modified thermal model (32) for the plurality of components (10, 12, 14, 16) of the first wind turbine (1); and controlling the first wind turbine (1) in accordance with the modified thermal model (32).

## Description

### Technical field

The invention relates to a method and control system for controlling a wind turbine, and in particular the invention relates to control of a wind turbine to account for thermal constraints for components of the wind turbine.

### Background to the invention

A wind turbine is a complex system including a number of electrical and mechanical components, such as a gearbox, an electrical generator, a power converter, a high-voltage transformer and a hydraulic power unit (HPU). During operation, the respective temperatures of some components vary as a function of ambient conditions and the level of power being produced by the wind turbine. However, each of these components is designed to operate within a particular temperature range to optimise both the instantaneous performance of the component and also the component lifetime.

For the gearbox, the temperature of lubricating oil impacts its viscosity and therefore the performance of the gearbox. Typically, it may be desirable to hold the lubricating oil at a temperature of around 50°C, for example. Similarly, the HPU includes hydraulic pumps that are used to control the pitch of the blades of the wind turbine, which rely on lubricating oil to operate effectively and so temperature impacts performance in a similar way as for the gearbox. In the electrical generator, the temperature of the stator should be kept as low as possible for optimised performance. The performance of the power converter is generally less influenced by temperature changes, but nonetheless temperatures at the extremes should ideally be avoided.

Each component may also have an associated critical temperature that should not be exceeded for safety reasons or to avoid damage to the component. For example, critical temperatures may be defined at around 60°C for the gearbox, around 155°C for the generator stator, at approximately 120° for the high-voltage transformer, and at around 65° for the HPU.

A wind turbine is typically equipped with cooling systems and other means for controlling the temperatures of its components to some extent, although the cooling performance of such systems is dependent on ambient conditions. If ambient conditions prevent the cooling systems from maintaining desired component temperatures at normal power production levels, the wind turbine can be derated as an additional measure for controlling component temperatures and in particular to avoid exceeding critical temperatures.

Derating of a wind turbine should be managed carefully due to the cost to power production. For example, although a need for derating may be apparent based on present operating conditions, the extent to which the wind turbine must be derated to restore thermal conditions to optimised levels may not be clear. If the wind turbine is derated to a greater extent than necessary to recover thermal conditions, there will be an opportunity cost in terms of power production and, in turn, the annual energy production (AEP) of the wind turbine.

Conversely, if the wind turbine components are at or below optimal temperatures there may be potential for the wind turbine to produce more power and thereby increase its AEP, but again it may not be clear how much more power the wind turbine can safely produce without compromising thermal constraints.

It is against this background that the invention has been devised.

### Summary of the invention

An aspect of the invention provides a method of controlling a wind turbine. The method comprises: determining an initial thermal model representing thermal characteristics of a plurality of components of a first wind turbine; receiving operational data comprising thermal characteristics of components of a plurality of wind turbines; processing the initial thermal model and the operational data using an optimisation algorithm to determine a modified thermal model for the plurality of components of the first wind turbine; and controlling the first wind turbine in accordance with the modified thermal model.

Using operational data from a group of wind turbines to train an initial thermal model for a first wind turbine produces a modified thermal model that more accurately reflects the expected thermal behaviour of the wind turbine in operation, and is therefore sufficiently reliable to base control of the wind turbine on thereafter. For example, the modified thermal model can predict variation of component temperatures due to changes in operation of the wind turbine, meaning that the predicted impact on component temperatures can be taken into account when scheduling such changes to wind turbine operation. So, the modified thermal model allows for thermal constraints to be managed in a proactive manner instead of a reactive manner.

For example, the modified thermal model enables a schedule for derating or up-rating the wind turbine to be optimised, in turn maximising the AEP of the wind turbine, whilst ensuring that the components of the wind turbine are kept at desired temperatures.

The initial thermal model may be created separately before using the optimisation algorithm. For example, the initial thermal model may be a known thermal model for the first wind turbine. Alternatively, the initial thermal model may be generated by the optimisation algorithm before being trained using the operational data to produce the modified thermal model.

The method may comprise receiving one or more temperature signals that are indicative of temperatures of respective components of the first wind turbine, and evaluating the performance of the first wind turbine in accordance with the or each temperature signal and the modified thermal model to determine a performance index for the first wind turbine. The performance index therefore provides an indication of whether the thermal state of the wind turbine is as expected for the present operating conditions, which can be used to inform changes to operation of the wind turbine to improve performance.

In general terms, the performance index may express the performance of the wind turbine in any suitable way. In some embodiments, the performance index is a numerical value. For example, a value below one for the performance index may indicate that the wind turbine is underperforming, in the sense that the thermal state of the wind turbine worse than expected for the present operating conditions, for example because the wind turbine is closer to violating thermal constraints than might be expected. Correspondingly, in this example a performance index having a value greater than one would indicate that the wind turbine is overperforming, in that the wind turbine is in a better thermal state than expected for the present operating conditions, for example because component temperatures are more optimal and/or further below the respective critical temperatures than might be expected.

The first wind turbine may be derated in accordance with the performance index. Such derating may be performed locally within the wind turbine, or through external commands such as those issued by a power plant controller. The first wind turbine may be derated if the performance index indicates that the wind turbine is underperforming, and correspondingly the first wind turbine may be up-rated if the first wind turbine is overperforming. Additionally, a power reference for the first wind turbine may be adjusted in accordance with the performance index. Accordingly, the method may comprise increasing the power reference if the performance index indicates that the first wind turbine is overperforming and/or decreasing the power reference if the performance index indicates that the first wind turbine is underperforming.

A servicing schedule for the first wind turbine may be adjusted in accordance with the performance index. In particular, if the performance index shows that the wind turbine is underperforming, a servicing schedule may be altered to reduce servicing intervals due to the increased wear and fatigue that may be expected for the components of the wind turbine in this scenario. Correspondingly, servicing intervals may be extended if the performance index indicates that the wind turbine is overperforming, as wear and fatigue may be reduced in this scenario. It follows that the servicing intervals may be related to a mean value for the performance index and thus may be adjusted dynamically during operation.

In some embodiments, the optimisation algorithm comprises a machine learning algorithm that is configured to train the initial thermal model using the operational data to produce the modified thermal model. The machine learning algorithm may be of any suitable type, including supervised learning algorithms and feature learning algorithms.

The plurality of wind turbines may comprise the first wind turbine. For example, the initial thermal model may be created independently of any operational data from the first wind turbine, optionally using operational data from other wind turbines, and then the initial thermal model may be trained using operational data from the first wind turbine, thereby producing a modified thermal model dynamically as the first wind turbine is operated.

The plurality of wind turbines may comprise wind turbines that are part of a wind power plant including the first wind turbine. Conveniently, operational data for such wind turbines may be readily available via a power plant controller, for example. Alternatively, or in addition, the plurality of wind turbines may comprise wind turbines that are not associated with the first wind turbine, for example because they are not part of a wind power plant including the first wind turbine, thereby increasing the range of data that may be available for determining the modified thermal model, in turn improving the quality of the modified thermal model.

The thermal characteristics of the plurality of wind turbines may comprise temperatures of components of one or more of the plurality of wind turbines. The operational data may also comprise indications of any of: wind conditions around one or more of the plurality of wind turbines; ambient conditions for one or more of the plurality of wind turbines; power production by one or more of the plurality of wind turbines; and a state of a cooling system of one or more of the plurality of wind turbines. Accordingly, the operational data may include indications of the temperatures of components of the other turbines, and also indications of factors influencing those component temperatures.

The components of the first wind turbine and/or of the plurality of wind turbines may include any of: a gearbox, an electrical generator, a power converter, a high-voltage transformer and a hydraulic power unit.

The optimisation algorithm may be used iteratively, such that the modified thermal model output from a previous optimisation routine is used as the initial thermal model in a subsequent process. Updated operational data can then be used to train the thermal model and so produce a further modified thermal model. Accordingly, the method may comprise, after determining a first modified thermal model for the plurality of components of the first wind turbine: receiving further operational data; and processing the first modified thermal model and the further operational data using the optimisation algorithm to determine a second modified thermal model for the plurality of components of the first wind turbine. So, an updated modified thermal model could be determined at regular intervals, for example. Alternatively, it may be sufficient to perform the optimisation process once, at commissioning for example.

The invention also extends to a control system configured to perform the method of the above aspect.

Another aspect of the invention provides a control system for a wind turbine. The control system comprises: an initial thermal model representing thermal characteristics of a plurality of components of a first wind turbine; an input configured to receive operational data relating to thermal characteristics of components of a plurality of wind turbines; a processing module configured to process the initial thermal model and the operational data using an optimisation algorithm to determine a modified thermal model for the plurality of components of the first wind turbine, and to generate a control signal for the first wind turbine in accordance with the modified thermal model; and an output configured to issue the control signal to the first wind turbine.

A further aspect of the invention provides a wind power plant comprising the control system of either of the above aspects.

It will be appreciated that preferred and/or optional features of each aspect of the invention may be incorporated alone or in appropriate combination in the other aspects of the invention also.

### Brief description of the drawings

So that it may be more fully understood, the invention will now be described, by way of example only, with reference to the following drawings, in which like features are assigned like reference numerals, and in which:
Figure 1 is a schematic diagram of a wind turbine that is suitable for use with embodiments of the invention;
Figure 2 is a schematic block diagram of an architecture of the wind turbine of Figure 1;
Figure 3 is a schematic diagram of a wind power plant comprising a plurality of wind turbines such as that illustrated in Figure 1; and
Figure 4 is a flow diagram showing a process according to the invention for optimising a thermal model for the wind turbine of Figure 1.

### Detailed description of embodiments of the invention

As noted above, embodiments of the invention determine an optimised thermal model representing thermal characteristics of components of a wind turbine by training an initial thermal model using operational data from a group of wind turbines and an optimisation algorithm, or 'machine learning algorithm'. The initial thermal model may be created using default data, or by the optimisation algorithm as an initial step in the optimisation process. The initial thermal model could also be the optimised thermal model of an earlier optimisation process.

The optimised thermal model can then be used to schedule changes to operation of the wind turbine to maximise power production whilst keeping the components of the wind turbine at suitable temperatures.

In particular, the optimised thermal model can be used to evaluate the thermal performance of the wind turbine and thereby optimise a derate strategy for the wind turbine, so that the wind turbine is derated to the minimum extent necessary to maintain the thermal state of the wind turbine. This is achieved by generating a performance index representing the thermal performance of the wind turbine relative to expectations, which is then used as an input to a derate controller that derates or up-rates the wind turbine as necessary, in particular to ensure that no component exceeds its critical temperature.

Separately, the performance index is also used to alter other aspects of wind turbine operation, such as operation of cooling systems and other auxiliary systems. The performance index is also used to adjust and optimise servicing schedules, noting that if component temperatures are regularly outside of the ideal range, wear and fatigue will increase and so more regular servicing will be beneficial.

The proposed approach can be implemented at the level of an individual wind turbine, or at the level of a wind farm, or 'wind power plant'. In the latter case, the benefits may be more obvious as operational data from a group of wind turbines forming the wind power plant can be used to produce individual optimised thermal models for each wind turbine in a coordinated manner. Moreover, the performance of each wind turbine of the wind power plant can be compared thereafter, which may allow faults or poorly performing components to be identified.

It is noted, however, that operational data used to train and optimise a thermal model may be obtained from wind turbines that do not belong to the same wind power plant as the wind turbine of interest. In general terms, operational data from any wind turbine having the same physical characteristics as the wind turbine of interest, which typically entails the same model of wind turbine, may be used to determine an optimised thermal model.

The operational data typically includes indications of temperatures of components of the group of wind turbines, as well as factors contributing to those temperatures including wind conditions, ambient conditions, power production and the state of cooling systems.

In practical terms, the optimisation procedure in which an optimised thermal model is produced by training an initial thermal model using operational data may be implemented in various ways. For example, the procedure could be implemented locally within a wind turbine, for example by the control system of a wind turbine, provided that the wind turbine has access to operational data for other wind turbines. Alternatively, the procedure may be performed externally of the wind turbine, for example by a power plant controller or by an entirely separate control system such as a data centre, a remote server, or a system used for commissioning the wind turbine.

The optimisation procedure may be performed once, for example at commissioning of the wind turbine. Alternatively, the optimisation procedure may be repeated to refine the thermal model further when more operational data becomes available, optionally at regular intervals.

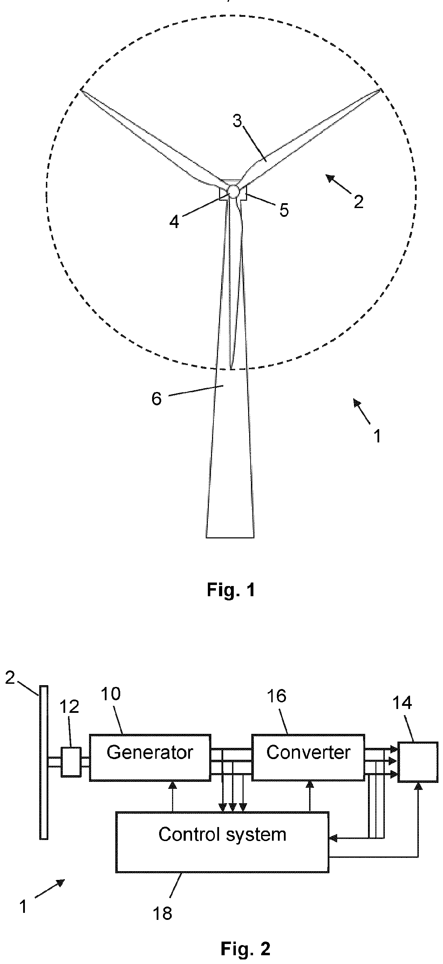

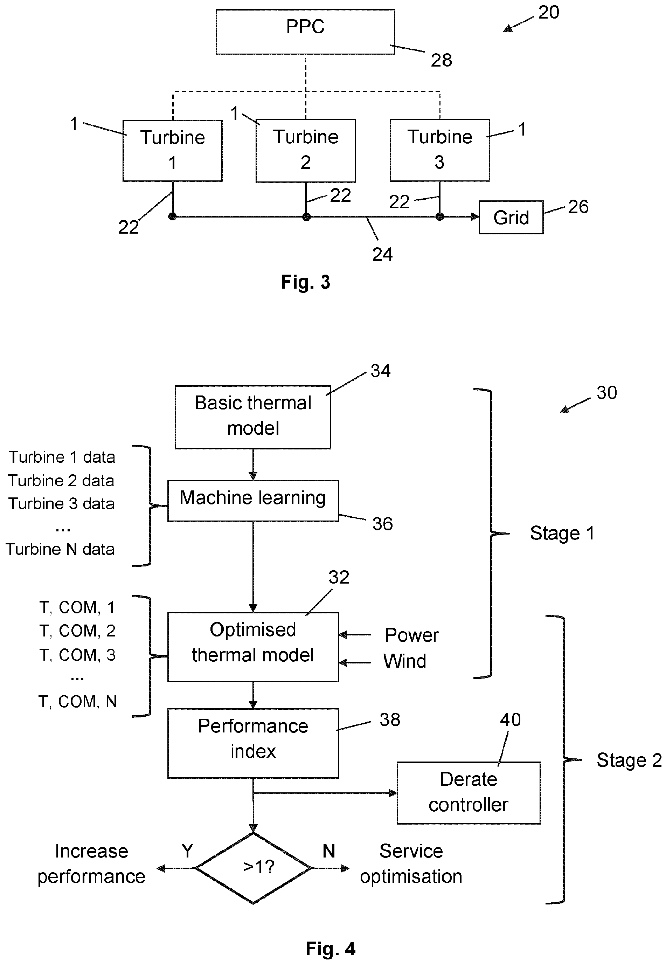

A specific example of an optimisation procedure and subsequent operation of a wind turbine in accordance with an optimised thermal model is described later with reference to Figure 4. First, to provide context for the invention an individual wind turbine 1 for which an optimised thermal model may be determined is described with reference to Figures 1 and 2. It should be appreciated that the wind turbine 1 of Figures 1 and 2 is referred to here by way of example only, and it would be possible to implement embodiments of the invention into many different types of wind turbine systems and power plant architectures.

The wind turbine 1 shown in Figure 1 is a three-bladed upwind horizontal-axis wind turbine (HAWT), which is the most common type of turbine in use. The wind turbine 1 comprises a rotor 2 having three blades 3 extending radially from, and equi-angularly spaced around, a central hub 4. It is noted that although three blades are common, different numbers of blades may be used in alternative implementations. The rotor 2 is supported by its hub 4 at the front of a nacelle 5, which in turn is mounted at the top of a support tower 6 that is secured to a foundation (not shown) that is embedded in the ground.

The nacelle 5 contains a generator (shown in Figure 2) that is driven by the rotor 2 to produce electrical energy. Thus, the wind turbine 1 is able to generate electrical power from a flow of wind passing through the swept area of the rotor 2 causing rotation of the blades 3. In this respect, the blades 3 cover a circular swept area that is represented in Figure 1 by a dashed circle encompassing the tips of the blades 3.

Figure 2 is a block diagram representation of selected components of the wind turbine 1 of Figure 1. The example shown is representative only and the skilled reader will appreciate that the methods described below may be applicable to many different configurations. Moreover, the components of the wind turbine 1 are conventional and as such familiar to the skilled reader, and so will only be described in overview.

As already noted, the wind turbine 1 comprises an electrical generator 10 that is driven by the rotor 2 to produce electrical power. A gearbox 12 is disposed between the rotor 2 and the generator 10 to provide a step-up in input speed for the generator 10 relative to the rotor speed. It is noted that wind turbines without a gearbox are also common.

The power produced in the electrical generator 10 is three-phase AC, but is not in a form suitable for delivery to a grid. In particular, in this example the electrical generator 10 is a low voltage system having an output voltage below 1000V, which is much lower than the voltage required by most electrical grids. Also, the generator output is typically not at the correct frequency or phase angle, because the frequency and angle of the generated power are determined, at least in part, by the speed of rotation of the rotor 2, which in turn is dependent on wind conditions.

Accordingly, the wind turbine 1 includes a high-voltage transformer 14 to provide a step-up in voltage, and a power converter 16 to process the electrical power produced by the electrical generator 10 into a suitable output waveform having the same frequency as the grid and the appropriate phase angle. In general terms, the power converter 16 provides AC to AC conversion by feeding electrical current through an AC-DC converter followed by a DC-AC converter in series.

It is noted that the topology illustrated in Figure 2 is entirely illustrative, and many architectures are known that would be suitable for use with embodiments of the invention.

Although not shown in Figure 2, the wind turbine 1 also includes an HPU that acts to change the pitch of the blades 3 of the rotor 2 according to wind conditions and power requirements. In addition, the wind turbine 1 includes a cooling system that is arranged to cool the various components of the wind turbine 1. As already noted, a secondary means of keeping component temperatures down is to adjust the output power of the wind turbine 1, as shall be described in more detail later with reference to Figure 4.

A control system 18 is provided that implements feedback-loop control for each component of the wind turbine 1 to control the output from the converter 16 to the grid. The control system 18 includes one or more controllers that act based on sample data obtained by a sampling system (not shown). In Figure 2, the control system 18 is represented by a single controller for simplicity. However, the skilled reader will appreciate that in practice it is common to use distributed control systems, in which each element of the wind turbine 1 has a respective controller.

Figure 3 shows the wind turbine 1 in the context of a wind power plant 20 having a plurality of individual wind turbines 1; specifically, three wind turbines 1 are present in the wind power plant 20 shown in Figure 2. A wind power plant is also often referred to as a 'wind farm' or 'wind park'.

In the wind power plant 20 of Figure 3, each wind turbine 1 has an output line 22 that connects to a transmission line 24 that takes electrical power generated within the wind power plant 20 to an electrical grid 26.

Although wind turbines may be capable of operating substantially autonomously and independently, in the arrangement shown in Figure 3 each wind turbine 1 of the wind power plant 20 is connected to a power plant controller (PPC) 28 that controls certain aspects of operation of each of the wind turbines 1 of the wind power plant 20. The PPC 28 communicates with the respective control system 16 of each wind turbine 1 using a suitable communications network. The PPC 28 may be responsible for monitoring operating conditions and for issuing power references to the respective control systems 18 of the wind turbines 1 based on an active power demand. The PPC 28 may therefore be considered to form part of the overall control system for controlling operation of each wind turbine 1.

Turning now to Figure 4, a two-stage optimisation process 30 for controlling a wind turbine is shown. The optimisation process 30 shall be described as applied to one of the wind turbines 1 of the wind power plant 20 of Figure 3, and as implemented by the PPC 28 of the wind power plant 20. It is noted, however, that the optimisation process 30 could be adapted for use with any wind turbine in any context. Similarly, the optimisation process 30 may be performed by any control system, including a control system integral to a wind turbine, or a control system external to and remote from the wind turbine of interest.

In a first stage of the optimisation process 30, a modified thermal model, or 'optimised thermal model' 32, is determined that represents thermal characteristics of components of the wind turbine 1 of interest. For example, the optimised thermal model 32 may represent thermal characteristics of the electrical generator 10, the high-voltage transformer 14, the power converter 16, the HPU and the gearbox 12. In other embodiments, the optimised thermal model 32 may represent thermal characteristics of a subset of these components and/or other components of the wind turbine 1, in accordance with applicational requirements.

In the second stage of the optimisation process 30, the optimised thermal model 32 is used in the control of the wind turbine 1.

Accordingly, the optimised thermal model 32 is the output of the first stage of the optimisation process 30, and the input to the second stage of the optimisation process 30. Thus, the first and second stages of the optimisation process 30 shown in Figure 4 overlap.

Although the optimisation process 30 is presented as a single, continuous process in Figure 4, it should be appreciated that the first and second stages can be performed entirely independently of each other as separate processes. For example, the optimised thermal model 32 for the wind turbine 1 may be determined at commissioning, whereas the second stage of the optimisation process 30 will not commence until operation of the wind turbine 1 begins. It is even possible for the first stage of the optimisation process 30 to complete at, or even before, the point of manufacture. In this respect, if a wind turbine 1 is to be replaced with another wind turbine 1 of the same model, as the model of wind turbine and the operating position will be the same for both the oncoming wind turbine 1 and the outgoing wind turbine 1, the oncoming wind turbine 1 can be loaded with the optimised thermal model 32 of the outgoing wind turbine 1; although it may be desirable to perform a follow-up optimisation process 32 in this case to account for any difference in performance between the individual wind turbines 1, noting that no two wind turbines 1 exhibit identical performance.

The thermal characteristics of the components that are modelled by the optimised thermal model 32 represent the temperature response of each component with respect to operating conditions for the wind turbine 1, taking into account ambient conditions, interaction between the components and the effect of any cooling systems. So, for example, the optimised thermal model 32 can be used to predict the temperature of the gearbox 12 after operating for two hours in a substantially steady-state in terms of wind conditions and power production.

The optimised thermal model 32 is also able to model the impact of disturbances to the system on component temperatures. To continue the above example, the optimised thermal model 32 can be used to predict the change in temperature of the gearbox 12 that would arise if the wind turbine 1 were to be derated by 5%. Thus, the minimum derating necessary to reduce the temperature of the gearbox 12, or any of the other components, to a desired level can be determined. In this way, a derating strategy for the wind turbine 1 can be optimised to ensure that derating is applied as sparingly as possible, thereby reducing the impact on the AEP.

As Figure 4 shows, the first stage of the optimisation process begins with the provision of an initial, basic thermal model 34. The basic thermal model 34 is typically of the same format and structure as the desired optimised thermal model, but uses initial values that are by nature less accurate than those of the optimised thermal model 32. The initial values may represent an initial estimate of the thermal characteristics of the relevant components of the wind turbine 1, or they may be entirely arbitrary such that they merely provide a starting point.

The basic thermal model 34 may be provided in various ways. It may be created manually using default or estimated values. Alternatively, the basic thermal model 34 may be produced dynamically during the optimisation process 30 by a machine learning algorithm. In a further alternative, the optimisation process 30 may be performed iteratively, in which case the basic thermal model 34 is the optimised thermal model 32 produced in the immediately previous optimisation process 30.

The basic thermal model 34 is then processed by an optimisation algorithm in the form of a machine learning algorithm 36. The machine learning algorithm 36 is configured to train the basic thermal model 34 using operational data from the wind turbines 1 of the wind power plant 20 to generate the optimised thermal model 32. The skilled reader will be aware of various kinds of machine learning algorithm suitable for this function, supervised learning algorithms and feature learning algorithms being examples, but many others are also known.

Accordingly, the optimised thermal model 32 is optimised in the sense that it represents the relevant thermal characteristics of the wind turbine components more accurately than the basic thermal model 34.

The operational data that is gathered by the machine learning algorithm 36 includes the respective temperatures of components of each wind turbine 1, as well as any contributing factors to those component temperatures, including ambient conditions, wind conditions, power production levels and cooling system states. Using this data, the machine learning algorithm 36 identifies relationships between the different operating variables to develop an evolving thermal model for the wind turbine 1 of interest. When the developing thermal model reaches a point at which further operational data has no significant impact on the model, it is considered an optimised thermal model 32, which then defines the output of the first stage of the optimisation process 30.

The operational data may include data from the wind turbine 1 of interest, namely the wind turbine 1 for which the optimised thermal model 32 will apply. Taking data from the wind turbine 1 of interest allows the optimised thermal model 32 to account for factors specific to the operating position of the wind turbine 1 of interest, as well as any variation in the performance of that wind turbine 1 compared to other turbines of the same model. However, it is not necessary for the operational data to include data from the wind turbine 1 of interest, and indeed such data may not be available if the optimisation process 30 is performed at commissioning.

Although in this example the operational data is gathered from within the wind power plant 20, in other embodiments suitable operational data can be sourced from any wind turbine having the same physical characteristics as the wind turbine of interest. In general terms, increasing the operational data that is made available to the machine learning algorithm 36 will improve the quality of the optimised thermal model 32 that is produced.

Once the optimised thermal model 32 is ready, the second stage of the optimisation process 30 can begin. As Figure 4 shows, in the second stage of the optimisation process 30 measurements of temperatures of the components of the wind turbine 1 of interest are fed to the optimised thermal model 32 alongside indications of present operating conditions, including wind conditions, ambient temperature, cooling system state and power production. The optimised thermal model 32 processes these various inputs to evaluate the present performance of the wind turbine 1. This involves predicting the respective temperatures of the wind turbine components based on the present operating conditions, and comparing the predicted temperatures with the corresponding actual temperatures as indicated by the temperature measurements. The result of this evaluation is expressed as a performance index 38, which in this case is a numerical value although any suitable representation can be used.

More specifically, in this embodiment a performance index 38 having a value of one indicates that the wind turbine 1 is performing exactly according to expectations and operational requirements, in that each component of the wind turbine 1 is at a temperature that is expected for the present level of power production and ambient conditions. Accordingly, if the optimisation of the thermal model 32 has been effective, the performance index should be close to one for the majority of operating time. It follows that if the performance index 38 regularly deviates from one it may be necessary to refine the thermal model 38 by repeating the training process using the machine learning algorithm 36 with updated operational data.

Correspondingly, a performance index 38 below one indicates that the wind turbine 1 is underperforming, in that the thermal condition of the wind turbine 1 is worse than expected for the present operating conditions. This might mean, for example, that one of the components of the wind turbine 1 is unexpectedly approaching its critical temperature.

Conversely, a performance index 38 that is greater than one indicates that the wind turbine 1 is 'overperforming', meaning that the thermal condition of the wind turbine 1 is better than expected for the present operating conditions. For example, this might mean that one of the components of the wind turbine 1 is at a more optimal temperature than expected for present operating conditions. An implication of this is that the wind turbine 1 could produce more power without violating any thermal constraints.

The performance index 38 is transmitted to a derate controller 40, which in this example forms part of the control system 18 of the wind turbine 1 and is responsible for generating commands to derate, or conversely to up-rate, the wind turbine 1.

In this example, the performance index 38 is calculated by the PPC 28, and thus is transmitted from the PPC 28 to the relevant wind turbine 1. The derate controller 40 may be embodied as a dedicated controller or as a module within another controller, for example within a turbine controller.

The derate controller 40 uses the performance index 38 as an input for determining and optimising a derate strategy for the wind turbine 1. In this respect, it is noted that there are various reasons for adjusting the power rating of a wind turbine 1 during operation, and so the derate controller 40 considers the performance index 38 alongside all other relevant operating parameters to determine an optimised derate strategy. For example, the derate controller 40 may select between multiple power references received from various parts of the control system 18.

Regarding derating due to thermal considerations specifically, based on the performance index 38 the derate controller 40 acts to derate the wind turbine 1 to avoid exceeding a critical temperature in any of the relevant components, typically implementing a safety buffer. The derate controller 40 may allow some short-term drift from entirely optimal component temperatures, however, if doing so aids other aspects of operation of the wind turbine 1.

The derate controller 40 takes the magnitude of the performance index 38 into account, in that the extent of derating that is applied is related to the extent to which the performance index 38 has deviated from one. This helps to ensure that the wind turbine 1 is not derated more than is necessary, and thus helps to maximise the AEP of the wind turbine 1.

Correspondingly, the derate controller 40 acts in a complementary manner to adjust the power rating of the wind turbine 1 upwardly when the performance index 38 indicates that it is safe to do so, provided that there are no other reasons for a reduced power rating.

The second stage of the optimisation process 30 iterates continuously, meaning that the performance index 38 is regularly updated and forwarded to the derate controller 40. So, the derate controller 40 may be considered to implement closed-loop control of the power rating of the wind turbine 1 in which the performance index 38 represents feedback in the control loop.

As Figure 4 shows, the performance index 38 can also be used in other ways. For example, if the performance index 38 is above one such that the wind turbine 1 is overperforming, the performance of the wind turbine can be increased 1. For example, power references that are used to control the power produced by the wind turbine 1 can be increased within the boundaries of the present rated power of the wind turbine 1. It is noted that it is typically not necessary to reduce power references directly if the performance index 38 is below one, as this is provided for by the derating of the wind turbine 1 by the derate controller 40.

However, if the performance index 38 is below one such that the wind turbine 1 is considered to be underperforming, another action that can be taken is to adjust servicing intervals for the components of the wind turbine 1, to reflect the increased wear and fatigue implied by the low value of the performance index 38. In practice, this may be implemented in various ways. For example, the servicing intervals could be continuously or intermittently adjusted in accordance with a mean value of the performance index 38. Alternatively, a servicing interval could be decreased by a predetermined value each time the performance index 38 drops below a threshold value. Equally, servicing intervals can be extended when the performance index 38 indicates that the wind turbine 1 is overperforming, which implies reduced wear on the components of the wind turbine 1.

So, in summary the performance index 38 can be used to optimise a servicing strategy for the wind turbine 1 in a similar way to how it is used to optimise a derating strategy.

A further use for the performance index 38 is that it provides an indication of how the individual components of the wind turbine 1 perform relative to their counterparts in equivalent wind turbines 1. This may provide an early warning of faults, for example. It also facilitates a comparison between corresponding components in a manner that corrects for the individual circumstances in which each component is operating, allowing benchmarking of component suppliers for example.

The skilled person will appreciate that modifications may be made to the specific embodiments described above without departing from the inventive concept as defined by the claims.

## Claims

1. A method of controlling a wind turbine (1), the method comprising:
determining an initial thermal model (34) representing thermal characteristics of a plurality of components (10, 12, 14, 16) of a first wind turbine (1);
receiving operational data comprising thermal characteristics of components (10, 12, 14, 16) of a plurality of wind turbines (1);
processing the initial thermal model (34) and the operational data using an optimisation algorithm (36) to determine a modified thermal model (32) for the plurality of components (10, 12, 14, 16) of the first wind turbine (1); and
controlling the first wind turbine (1) in accordance with the modified thermal model (32).

2. The method of claim 1, comprising:
receiving one or more temperature signals that are indicative of temperatures of respective components (10, 12, 14, 16) of the first wind turbine (1); and
evaluating the performance of the first wind turbine (1) in accordance with the or each temperature signal and the modified thermal model (32) to determine a performance index (38) for the first wind turbine (1).

3. The method of claim 2, comprising derating the first wind turbine (1) in accordance with the performance index (38).

4. The method of claim 2 or claim 3, comprising adjusting a power reference for the first wind turbine (1) in accordance with the performance index (38).

5. The method of claim 4, comprising increasing the power reference if the performance index (38) indicates that the first wind turbine (1) is overperforming.

6. The method of claim 4 or claim 5, comprising decreasing the power reference if the performance index (38) indicates that the first wind turbine (1) is underperforming.

7. The method of any of claims 2 to 6, comprising adjusting a servicing schedule for the first wind turbine (1) in accordance with the performance index (38).

8. The method of any preceding claim, wherein the optimisation algorithm (36) comprises a machine learning algorithm that is configured to train the initial thermal model (34) using the operational data to produce the modified thermal model (32).

9. The method of any preceding claim, wherein the plurality of wind turbines (1) comprises the first wind turbine (1).

10. The method of any preceding claim, wherein the plurality of wind turbines (1) comprises wind turbines (1) that are part of a wind power plant (20) including the first wind turbine (1).

11. The method of any preceding claim, wherein the plurality of wind turbines (1) comprises wind turbines that are not part of a wind power plant (20) including the first wind turbine (1).

12. The method of any preceding claim, wherein the thermal characteristics of the plurality of wind turbines (1) comprises temperatures of components (10, 12, 14, 16) of one or more of the plurality of wind turbines (1).

13. The method of any preceding claim, wherein the operational data also comprises indications of any of: wind conditions around one or more of the plurality of wind turbines (1); ambient conditions for one or more of the plurality of wind turbines (1); power production by one or more of the plurality of wind turbines (1); and a state of a cooling system of one or more of the plurality of wind turbines (1).

14. The method of any preceding claim, wherein the plurality of components (10, 12, 14, 16) of the first wind turbine (1) include any of: a gearbox (12); an electrical generator (10); a power converter (16); a high-voltage transformer (14); and a hydraulic power unit.

15. The method of any preceding claim, wherein the components (10, 12, 14, 16) of the plurality of wind turbines (1) include any of: a gearbox (12); an electrical generator (10); a power converter (16); a high-voltage transformer (14); and a hydraulic power unit.

16. The method of any preceding claim, comprising, after determining a first modified thermal model (32) for the plurality of components (10, 12, 14) of the first wind turbine (1):
receiving further operational data; and
processing the first modified thermal model (32) and the further operational data using the optimisation algorithm (36) to determine a second modified thermal model (32) for the plurality of components (10, 12, 14) of the first wind turbine (1).

17. A control system (18, 28) for a wind turbine (1), the control system (18, 28) comprising:
an initial thermal model (34) representing thermal characteristics of a plurality of components (10, 12, 14, 16) of a first wind turbine (1);
an input configured to receive operational data relating to thermal characteristics of components (10, 12, 14, 16) of a plurality of wind turbines (1);
a processing module configured to process the initial thermal model (34) and the operational data using an optimisation algorithm (36) to determine a modified thermal model (32) for the plurality of components (10, 12, 14, 16) of the first wind turbine (1), and to generate a control signal for the first wind turbine (1) in accordance with the modified thermal model (32); and
an output configured to issue the control signal to the first wind turbine (1).

18. A wind power plant (20) comprising the control system (18, 28) of claim 17.
